# EUROPEAN PATENT SPECIFICATION

(11) **EP 4 368 264 B1**
(45) Date of publication and mention of the grant of the patent: **25.11.2026**
(21) Application number: 22836510.2
(22) Date of filing: 09.03.2022
(51) Int. Cl.: A63B 21/005, A63B 21/00, A63B 23/12, H02K 7/10, H02K 7/14, H02K 7/18, H02K 11/33, H02K 11/00, H02K 11/27, H02K 11/30, H02K 21/22, H02P 27/06, A63B 24/00, A63B 71/06

(54) **FITNESS DEVICE BASED ON DIRECT DRIVE ELECTRIC MOTOR**
FITNESSGERÄT BASIEREND AUF EINEM ELEKTROMOTOR MIT DIREKTANTRIEB
DISPOSITIF DE CONDITIONNEMENT PHYSIQUE BASÉ SUR UN MOTEUR ÉLECTRIQUE À ENTRAÎNEMENT DIRECT

(30) Priority: 05.07.2021 CN 202110759098
(43) Date of publication of application: 15.05.2024
(73) Proprietor: Dongguan Direct Drive Technology Limited, Dongguan, Guangdong 523000 (CN)
(72) Inventor: ZHANG, Di, Donguan City, Guangdong 523000 (CN); YU, Yanan, Donguan City, Guangdong 523000 (CN); ZHONG, Zhiming, Donguan City, Guangdong 523000 (CN)
(74) Representative: Cabinet Chaillot
(86) International application number: PCT/CN2022/079973
(87) International publication number: WO 2023/279750

(56) References cited:
- EP-B1- 3 182 575
- CN-A- 1 105 894
- CN-A- 105 498 151
- CN-A- 108 654 011
- CN-A- 112 057 795
- CN-A- 113 318 388
- CN-U- 208 424 164
- CN-U- 210 409 356
- CN-U- 210 409 356

## Description

### Cross-reference of Related Application

The application claims priority to Chinese Patent Application No. 202110759098.9, entitled "Fitness Device Based on Direct-drive Motor", filed with the China National Intellectual Administration on July 05, 2021.

### FIELD

The invention relates to the technical field of smart fitness, in particular to a fitness device based on a direct-drive motor.

### BACKGROUND

The improvement of people's living standard leads to gradual integration of cleaning robots into people's home life. Existing cleaning robots use a brush motor as the power source, a reduction box is used as a drive unit between the brush motor and separately arranged tires to reduce speed and increase force to provide power for travelling of the cleaning robots. With the development of the times and the progress of the society, people pay more and more attention to their physical health, so fitness devices are becoming more and more popular. Doing fitness exercise can improve the mood, resist chronic diseases, control the body weight, strengthen the cardio-pulmonary function, and promote better sleep.

At present, there are a wide variety of fitness devices with different functions on the market. Pull exercise is simple, thus being widely popularized. Pull fitness devices for healthcare still need to be improved. Traditional force-adjustable pull fitness devices are heavy and occupy a large area. The pull force of small and light pull-up bars cannot be changed, which is not beneficial to exercise of users.

Chinese Patent Publication No. 1105894A discloses an automatic tension mechanism driven directly by motor. The automatic tension mechanism comprises a motor, a brake frame fixed to a front output axle of the motor, a lock unit, a winch wheel arranged on the front output axle, a steel cable linked with a rubber ball to be jammed in a notch of the brake frame, a decoder on a back output axle of the motor, and a micro-computerized controller. A constant current from a current unit is passed to the motor under control of the controller. EP3182575B1 discloses a weight loading system for fitness equipments which includes a fitness equipment support, a rally rope, a motor, a motor driving and a motor control unit. The motor is a permanent magnet brushless DC motor with an external rotor structure, and the motor includes a stator mounted onto the fitness equipment support and an external rotor sheathed on the stator and rotatable with respect to the stator, and the rally rope is wound around the external rotor of the motor, and an end of the rally rope is coupled to the external rotor of the motor, and the other end of the rally rope is coupled to the power driving mechanism of the fitness equipment; the power driving mechanism is provided for driving the external rotor of the motor through the rally rope to rotate and generate a rally, and the motor control unit controls the motor to rotate in an opposite direction through the motor driving module, so as to produce a load force opposite to the rally. The weight loading system for fitness equipments structure is simple, lightweight, and achieves the effect of a stepless weight control.

### SUMMARY OF THE INVENTION

The invention is defined by the appended claims.

### OUTLINE OF THE DISCLOSURE

The objective of the invention is to solve the above technical problems by providing a fitness device based on a direct-drive motor, which has a fitness pull rope arranged on a driving motor functioning as a pull driver and adopts a control system to control the pull force of the driving motor to realize smart fitness.

The above objective can be fulfilled through following technical solution:

A fitness device based on a direct-drive motor, comprising a housing, a driving motor mounted in the housing, a fitness pull rope connected to the driving motor, and a control system connected to the driving motor. The control system comprises a main controller, a power module, a communication module, a driving circuit and a sampling module, the power module is electrically connected to the main controller and the communication module, the communication module is electrically connected to the main controller, the sampling module is electrically connected to the driving motor and the main controller, and the driving circuit is electrically connected to the power module, the main controller and the driving motor; characterized in that: the housing is provided with an operation panel electrically connected to the communication module, the operation panel is configured to input an instruction to the communication module and record motions therethrough; the sampling module continuously compares a sampled current of the driving motor with the input instruction and adjusting the current continuously until a pull force output by the driving motor reaching the value in the input instruction; the driving motor comprises a base, a stator assembly arranged on an outer edge of the base, a rotary shaft assembly arranged in the base, a rotor assembly connected to the rotary shaft assembly and covering the stator assembly, and a motor control plate arranged on the base and connected to the driving circuit; the base comprises an internal end, an external end and a rotary mounting cavity passing through the internal end and the external end, the rotary shaft assembly is rotatably mounted in the rotary mounting cavity, a mounting stand is arranged at the internal end, an internal groove is formed in the external end, a convex ring is arranged on an outer edge of the mounting stand, a mounting hole is formed in the convex ring, a plurality of gaps are formed in the mounting stand , through holes are formed in the external end, connected to the gaps and located on a side of the internal groove; the rotor assembly comprises an outer end cover connected to the rotary shaft assembly, a connecting ring connected to the outer end cover and corresponding to an outer edge of the stator assembly, and a rotor element mounted to the connecting ring and corresponding to the stator assembly, an inner end cover is connected to a side, away from the outer end cover, of the connecting ring, and the inner end cover is rotatably connected to an outer circumferential surface of the external end; the outer end cover is fixedly connected to a pull rope reel , and the fitness pull rope is wound around the pull rope reel , extends out of the housing and is connected to a grip ring. The stator assembly comprises an iron core and coils regularly arranged on the iron core. The iron core comprises a plurality of teeth arranged in a circumferential direction thereof, the coils are wound around the teeth, and an outer circumferential surface of the internal end is provided with a plurality of fastening grooves corresponding to an inner circumferential surface of the iron core. The rotary shaft assembly comprises a bearing assembly mounted in the rotary mounting cavity and a rotary shaft rotatably mounted in the bearing assembly, one end of the rotary shaft is connected to the rotor assembly, and a fixing element is mounted at the other end of the rotary shaft; and the rotary mounting cavity is provided with a first limit groove and a second limit groove, the bearing assembly is provided with two bearings, and the two bearings are mounted in the first limit groove and the second limit groove respectively.

Details of one or more embodiments of the invention are presented in the following drawings and description. Other features, objectives and advantages of the invention will become obvious in the specification, drawings and claims.

Compared with traditional fitness devices, the fitness device provided by the invention is a pull fitness device, which has a fitness pull rope arranged on a driving motor functioning as a pull driver and adopts a control system to control the pull force of the driving motor, thereby realizing smart fitness. The control system receives an input corresponding pull force instruction through a communication module, a main controller outputs a corresponding program to a driving circuit through a control algorithm after acquiring the instruction, the driving circuit controls on/off of the three-phase current of the driving motor, and then a sampling module continuously compares the sampled current of the driving motor with the input instruction and adjusts the current continuously until the pull force output by the driving motor reaches the value in the input instruction, such that the pull force can be adjusted freely. Specifically, the fitness device comprises a housing, a driving motor mounted in the housing, a fitness pull rope connected to the driving motor, and a control system connected to the driving motor; and the control system comprises a main controller, a power module, a communication module, a driving circuit and a sampling module, the power module is electrically connected to the main controller and the communication module, the communication module is electrically connected to the main controller, the sampling module is electrically connected to the driving motor and the main controller, and the driving circuit is electrically connected to the power module, the main controller and the driving motor. The direct-drive motor functions as a driving source of the pull fitness device, and the control system is used for realizing intelligent control, such that the practicability is high, and the intelligent level is high.

### BRIEF DESCRIPTION OF THE DRAWINGS

Embodiments and/or examples of the invention disclosed here can be better described and explained with reference to one or more drawings. Additional details or examples for describing the drawings should not be construed as limitations of any one of the invention disclosed, currently described embodiments and/or examples, and currently appreciated optimal modes of the invention.

In the drawings:
FIG. 1 is a perspective view of a fitness device according to the invention;
FIG. 2 is an exploded view of the fitness device in FIG. 1;
FIG. 3 illustrates a driving motor and a fitness pull rope in FIG. 2;
FIG. 4 is a front view of the driving motor according to the invention;
FIG. 5 is a sectional view taken along line A-A in FIG. 4;
FIG. 6 illustrates a base of the driving motor in FIG. 5;
FIG. 7 is an exploded view of the driving motor according to the invention;
FIG. 8 is a schematic connection diagram of a control system according to the invention;
FIG. 9 is a circuit diagram of a main controller of the control system in FIG. 8;
FIG. 10 is a circuit diagram of a driving circuit of the control system in FIG. 8; and
FIG. 11 is a circuit diagram of a communication module of the control system in FIG. 8.

Reference signs: 1, housing; 11, operation panel; 2, driving motor; 21, base; 211, internal end; 211a, mounting stand; 211b, gaps; 212, external end; 213, rotary mounting cavity; 22, stator assembly; 221, iron core; 222, coil; 223, armature rib; 23, rotary shaft assembly; 231, bearing assembly; 232, rotary shaft; 233, fixing element; 24, rotor assembly; 241, outer end cover; 241a, reinforcing stand; 241b, pull rope reel; 242, connecting ring; 243, rotor element; 244, inner end cover; 25, motor control plate; 3, fitness pull rope; 31, grip ring; 4, control system; 41, main controller; 42, power module; 43, communication module; 44, driving circuit; 45, sampling module.

### DESCRIPTION OF THE EMBODIMENTS

To gain a better understanding of the invention, the invention will be described more comprehensively below with reference to related drawings. The drawings illustrate preferred embodiments of the invention. However, the invention can be implemented in many different forms, and is not limited to the embodiments described in the specification. On the contrary, these embodiments are provided for a more thorough and comprehensive understanding of the disclosure of the invention.

It should be noted that when one element is referred to as being "fixed to" the other element, it may be directly fixed to the other element or there may be an intermediate element between the two elements. When one element is referred to as being "connected to" the other element, it may be directly connected to the other element or there may be an intermediate element between the two elements.

Unless otherwise defined, all technical and scientific terms used in the specification have the same meanings as commonly understood by those skilled in the art. The terms used in the specification of the invention are merely for the purpose of describing specific embodiments of the invention and are not intended to limit the invention.

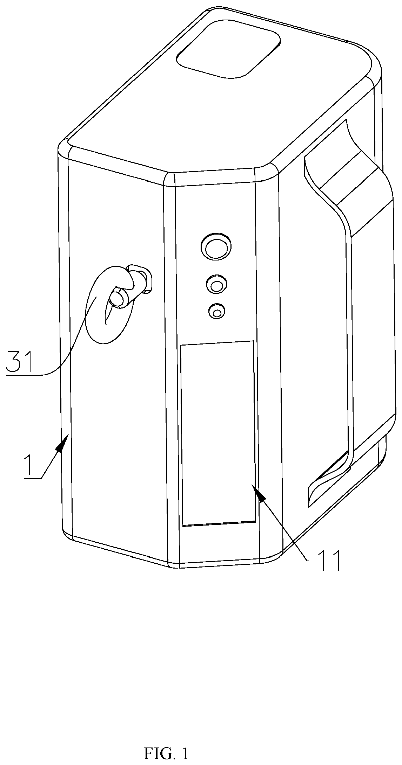

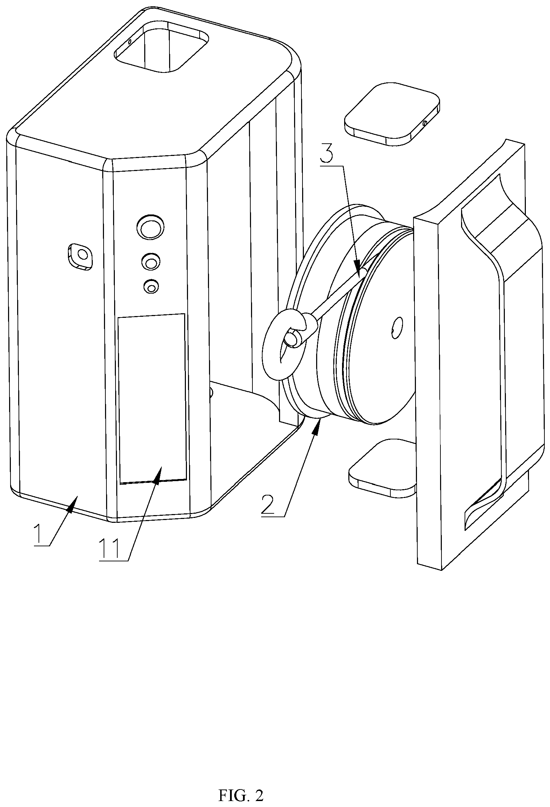

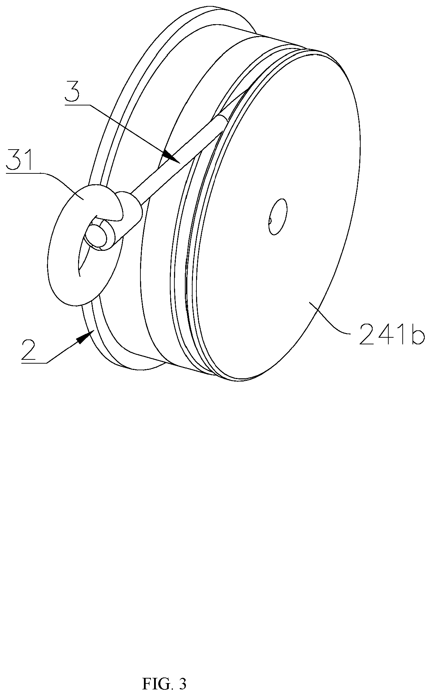

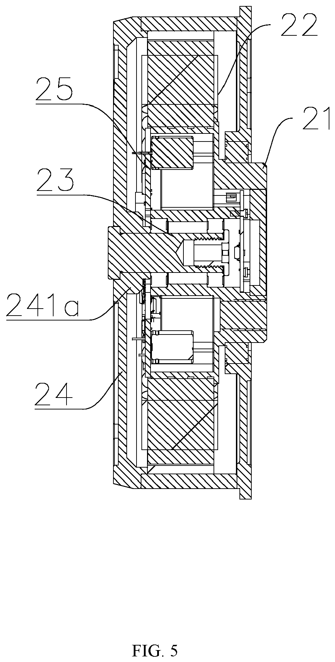

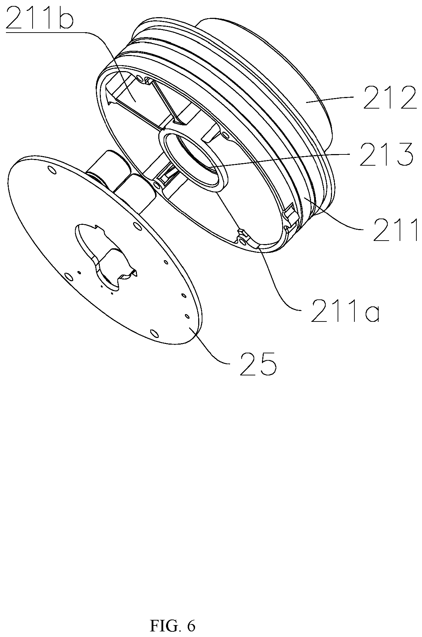

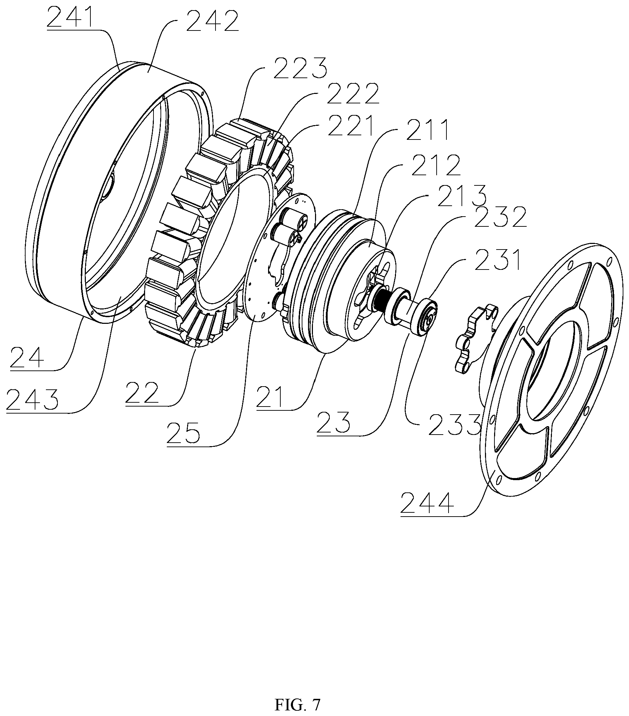

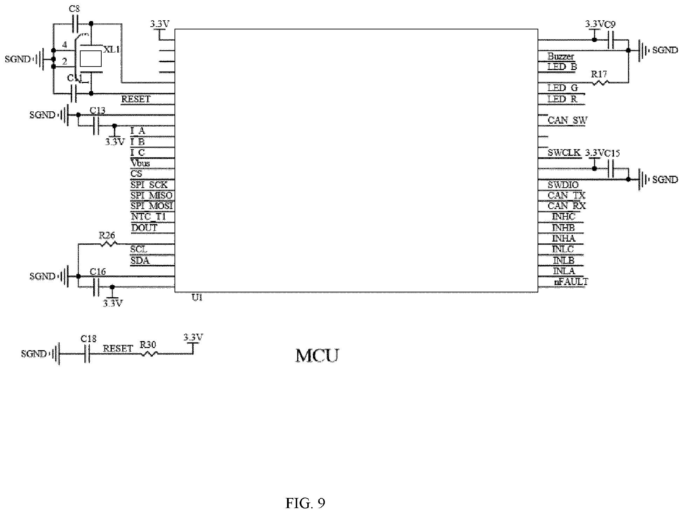

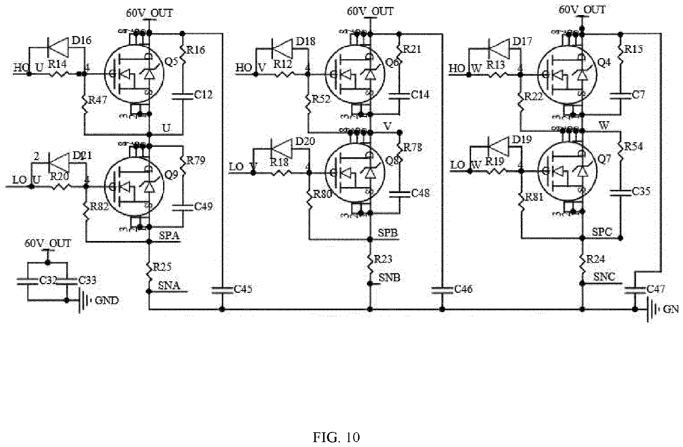

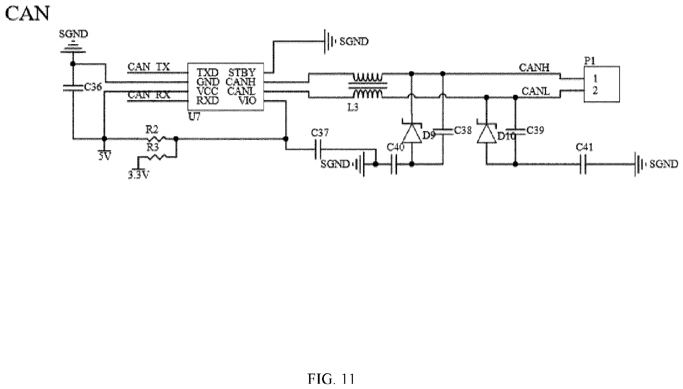

As shown in FIGS. 1-11, a fitness device based on a direct-drive motor comprises a housing 1, a driving motor 2 mounted in the housing 1, a fitness pull rope 3 connected to the driving motor 2, and a control system 4 connected to the driving motor 2. The control system 4 comprises a main controller 41, a power module 42, a communication module 43, a driving circuit 44 and a sampling module 45. The power module 42 is electrically connected to the main controller 41 and the communication module 43, the communication module 43 is electrically connected to the main controller 41, the sampling module 45 is electrically connected to the driving motor 2 and the main controller 41, and the driving circuit 44 is electrically connected to the power module 42, the main controller 41 and the driving motor 2.

The housing 1 is provided with an operation panel 11 electrically connected to the communication module 43. The operation panel 11 is configured to input an instruction to the communication module 43 to facilitate operation and use, and motions can be recorded through the operation panel 11, thereby achieving high practicability.

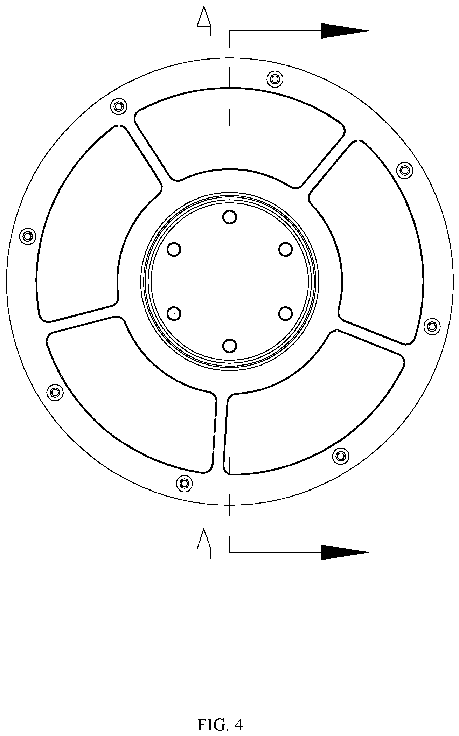

Referring to FIGS. 4-7, the driving motor 2 comprises a base 21, a stator assembly 22 arranged on an outer edge of the base 21, a rotary shaft assembly 23 arranged in the base 21, a rotor assembly 24 connected to the rotary shaft assembly 23 and covering the stator assembly 22, and a motor control plate 25 arranged on the base 21 and connected to the driving circuit 44. During the operating process of the driving motor 2, motor driving is controlled through the motor control plate 25, the rotor assembly 24 and the stator assembly 22 work together to implement the driving process, and the rotary shaft assembly 23 works together with the rotor assembly 24 to realize stable rotation in the base 21, thereby achieving high driving precision.

The base 21 comprises an internal end 211, an external end 212 and a rotary mounting cavity 213 passing through the internal end 211 and the external end 212, the rotary shaft assembly 23 is rotatably mounted in the rotary mounting cavity 213, a mounting stand 211a is arranged at the internal end 211, an internal groove 212a is formed in the external end 212, a convex ring is arranged on an outer edge of the mounting stand 211a, mounting holes are defined in the convex ring, a plurality of gaps 211b are formed in the mounting stand 211a, and through holes are formed in the external end 212. The through holes are connected to the gaps 211b and located on one side of the internal groove 212a. The internal end 211 and the external end 212 are used for installation of internal structure and connection of external structure respectively, and the rotary mounting cavity 213 is used for mounting and fixing the rotary shaft assembly 23, such that installation is easy. The gaps 211b and the mounting stand 211a work together to realize installation of the motor control plate 25, such that the structure is reliable.

The stator assembly 22 comprises an iron core 221 and coils 222 regularly arranged on the iron core 221. The iron core 221 comprises a plurality of teeth 223 regularly arranged in a circumferential direction thereof. The coils 222 are wound around the teeth 223. An outer circumferential surface of the internal end 211 is provided with a plurality of fastening grooves corresponding to an inner circumferential surface of the iron core 221. The coils 222 are wound around the teeth 223, such that the structure is simple, and the stability is good.

The rotary shaft assembly 23 comprises a bearing assembly 231 mounted in the rotary mounting cavity 213 and a rotary shaft 232 rotatably mounted in the bearing assembly 231. One end of the rotary shaft 232 is connected to the rotor assembly 24, and a fixing element 233 is mounted at the other end of the rotary shaft 232. The rotary mounting cavity 213 is provided with a first limit groove and a second limit groove, the bearing assembly 231 comprises two bearings, and the two bearings are mounted in the first limit groove and the second limit groove respectively. The two bearings are used for mounting the rotary shaft 232, such that installation is easy, and the structure is stable.

The rotor assembly 24 comprises an outer end cover 241 connected to the rotary shaft assembly 23, a connecting ring 242 connected to the outer end cover 241 and corresponding to an outer edge of the stator assembly 22, and a rotor element 243 mounted on the connecting ring 242 and corresponding to the stator assembly 22, an inner end cover 244 is connected to a side, away from the outer end cover 241, of the connecting ring 242, and the inner end cover 244 is rotatably connected to an outer circumferential surface of the external end 212. The outer end cover 241 works together with the connecting ring 242 to realize structural connection, and the rotor element 243 works together with the stator assembly 22 to realize motor driving, such that driving is stable.

The outer end cover 241 is provided with a reinforcing stand 241a, the reinforcing stand 241a is provided with a connecting hole, a limit shoulder is arranged in the connecting hole, and the outer end cover 241 is connected to the rotary shaft assembly 23 through the connecting hole. The inner end cover 244 is connected to a connecting bearing, and the connecting bearing is disposed around the outer circumferential surface of the external end 212. The outer end cover 241 can be connected to the rotary shaft assembly 23 through the reinforcing stand 241a and the limit shoulder, such that connection is easy, and the structure is stable.

The outer end cover 241 is fixedly connected to a pull rope reel 241b, and the fitness pull rope 3 is wound around the pull rope reel 241b, extends out of the housing 1 and is connected to a grip ring 31. The outer end cover 241 is connected to the pull rope reel 241b and drives the pull rope reel 241b to drive the fitness pull rope 3 to move, such that operation and use of exercisers are facilitated.

The main controller 41 is an MCU processor, the communication module 43 is a communication interface connected to the operation panel 11, and the sampling module 45 is a current sampling module and is used for sampling the current of the driving motor 2. The MCU processor is used as the main controller 41 and cooperates with the communication interface to realize intelligent control, such that the control effect is good, and the intelligent level is high.

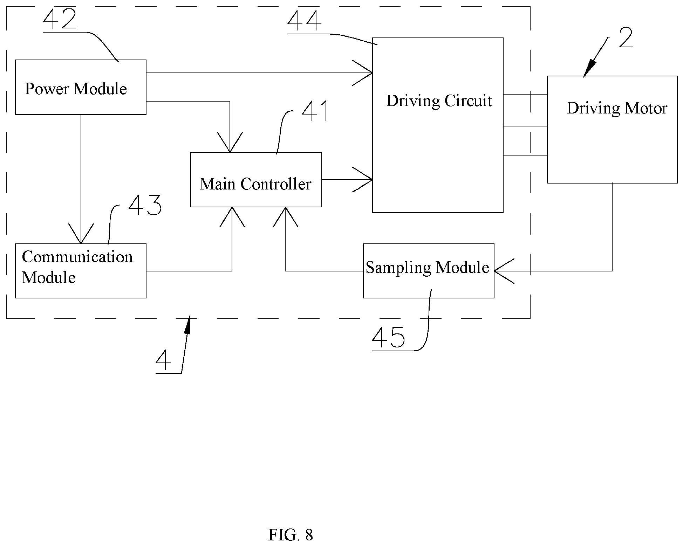

Referring to FIGS. 8-11, the fitness device provided by the invention is a pull fitness device, which has the fitness pull rope 3 arranged on the driving motor 2 functioning as a pull driver and adopts the control system 4 to control the pull force of the driving motor 2, thereby realizing smart fitness. The control system 4 receives an input corresponding pull force instruction through the communication module 43, the main controller 41 outputs a corresponding program to the driving circuit 44 through a control algorithm after acquiring the instruction, the driving circuit 44 controls on/off of the three-phase current of the driving motor 2, and then the sampling module 45 continuously compares the sampled current of the driving motor 2 with the input instruction and adjusts the current continuously until the pull force output by the driving motor 2 reaches the value in the input instruction, such that the pull force can be adjusted freely. Specifically, the fitness device comprises the housing 1, the driving motor 2 mounted in the housing 1, the fitness pull rope 3 connected to the driving motor 2, and the control system 4 connected to the driving motor 2; and the control system 4 comprises the main controller 41, the power module 42, the communication module 43, the driving circuit 44 and the sampling module 45, the power module 42 is electrically connected to the main controller 41 and the communication module 43, the communication module 43 is electrically connected to the main controller 41, the sampling module 45 is electrically connected to the driving motor 2 and the main controller 41, and the driving circuit 44 is electrically connected to the power module 42, the main controller 41 and the driving motor 2. The direct-drive motor is used as a driving source of the pull fitness device, and the control system 4 is used for realizing intelligent control, such that the practicability is high, and the intelligent level is high.

The above embodiments merely represent several implementations of the invention and are specifically described in detail, but they should not be construed as limitations of the patent scope of the invention. It should be pointed out that those ordinarily skilled in the art can make various transformations and improvements without departing from the concept of the invention, and all these transformations and improvements should fall within the protection scope of the invention. Therefore, the protection scope of the invention patent should be defined by the appended claims.

## Claims

1. A fitness device based on a direct-drive motor, comprising a housing (1), a driving motor (2) mounted in the housing (1), a fitness pull rope (3) connected to the driving motor (2), and a control system (4) connected to the driving motor (2), wherein the control system (4) comprises a main controller (41), a power module (42), a communication module (43), a driving circuit (44) and a sampling module (45), the power module (42) is electrically connected to the main controller (41) and the communication module (43), the communication module (43) is electrically connected to the main controller (41), the sampling module is electrically connected to the driving motor and the main controller, and the driving circuit (44) is electrically connected to the power module (42), the main controller (41) and the driving motor; **characterized in that**:
the housing (1) is provided with an operation panel (11) electrically connected to the communication module (43), the operation panel (11) is configured to input an instruction to the communication module (43) and record motions therethrough;
the sampling module (45) continuously compares a sampled current of the driving motor (2) with the input instruction and adjusts the current continuously until a pull force output by the driving motor (2) reaches the value in the input instruction;
the driving motor (2) comprises a base (21), a stator assembly (22) arranged on an outer edge of the base (21), a rotary shaft assembly (23) arranged in the base (21), a rotor assembly (24) connected to the rotary shaft assembly (23) and covering the stator assembly (22), and a motor control plate (25) arranged on the base (21) and connected to the driving circuit (44);
the base (21) comprises an internal end (211), an external end (212) and a rotary mounting cavity (213) passing through the internal end (211) and the external end (212), the rotary shaft assembly (23) is rotatably mounted in the rotary mounting cavity (213), a mounting stand (211a) is arranged at the internal end (211), an internal groove (212a) is formed in the external end (212), a convex ring is arranged on an outer edge of the mounting stand (211a), a mounting hole is formed in the convex ring, a plurality of gaps (211b) are formed in the mounting stand (211a), through holes are formed in the external end (212), connected to the gaps (211b) and located on a side of the internal groove (212a);
the rotor assembly (24) comprises an outer end cover (241) connected to the rotary shaft assembly (23), a connecting ring (242) connected to the outer end cover (241) and corresponding to an outer edge of the stator assembly (22), and a rotor element (243) mounted to the connecting ring (242) and corresponding to the stator assembly (22), an inner end cover (244) is connected to a side, away from the outer end cover (241), of the connecting ring (242), and the inner end cover (244) is rotatably connected to an outer circumferential surface of the external end (212);
the outer end cover (241) is fixedly connected to a pull rope reel (241b), and the fitness pull rope (3) is wound around the pull rope reel (241b), extends out of the housing (1) and is connected to a grip ring (31);
the stator assembly (22) comprises an iron core (221) and coils (222) regularly arranged on the iron core (221), the iron core (221) comprises a plurality of teeth (223) arranged in a circumferential direction thereof, the coils (222) are wound around the teeth (223), and an outer circumferential surface of the internal end (211) is provided with a plurality of fastening grooves corresponding to an inner circumferential surface of the iron core (221); and
the rotary shaft assembly (23) comprises a bearing assembly (231) mounted in the rotary mounting cavity (213) and a rotary shaft (232) rotatably mounted in the bearing assembly (231),
one end of the rotary shaft (232) is connected to the rotor assembly (24), and a fixing element (233) is mounted at the other end of the rotary shaft (232); and the rotary mounting cavity (213) is provided with a first limit groove and a second limit groove, the bearing assembly (231) is provided with two bearings, and the two bearings are mounted in the first limit groove and the second limit groove respectively.

2. The fitness device based on a direct-drive motor according to Claim 1, **characterized in that** the outer end cover (241) is provided with a reinforcing stand (241a), the reinforcing stand (241a) is provided with a connecting hole, a limit shoulder is arranged in the connecting hole, and the outer end cover (241) is connected to the rotary shaft assembly (23) through the connecting hole; and the inner end cover (244) is connected to a connecting bearing, and the connecting bearing is disposed around the outer circumferential surface of the external end (212).

3. The fitness device based on a direct-drive motor according to Claim 1, **characterized in that** the main controller (41) is an MCU processor, the communication module (43) is a communication interface connected to the operation panel (11), and the sampling module (45) is a current sampling module and used for sampling a current of the driving motor (2).

## Patentansprüche

1. - Fitness-Vorrichtung auf Grundlage eines Motors mit Direktantrieb, umfassend ein Gehäuse (1), einen Antriebsmotor (2), der in dem Gehäuse (1) angebracht ist, ein Fitnesszugseil (3), das mit dem Antriebsmotor (2) verbunden ist, und ein Steuersystem (4), das mit dem Antriebsmotor (2) verbunden ist, wobei sas Steuersystem (4) eine Hauptsteuereinrichtung (41), ein Leistungsmodul (42), ein Kommunikationsmodul (43), eine Antriebsschaltung (44) und ein Abtastmodul (45) umfasst, wobei das Leistungsmodul (42) mit der Hauptsteuereinrichtung (41) und dem Kommunikationsmodul (43) elektrisch verbunden ist, das Kommunikationsmodul (43) mit der Hauptsteuereinrichtung (41) elektrisch verbunden, das Abtastmodul mit dem Antriebsmotor und der Hauptsteuereinrichtung elektrisch verbunden ist und die Antriebsschaltung (44) mit dem Leistungsmodul (42), der Hauptsteuereinrichtung (41) und den Antriebsmotor elektrisch verbunden ist; **dadurch gekennzeichnet, dass**: das Gehäuse (1) mit einem Bedienfeld (11) versehen ist, das mit dem Kommunikationsmodul (43) elektrisch verbunden ist, wobei das Bedienfeld (11) zum Eingeben von Anweisungen in das Kommunikationsmodul (43) und dadurch zum Aufzeichnen von Bewegungen konfiguriert ist;
wobei das Abtastmodul (45) kontinuierlich einen abgetasteten Strom des Antriebsmotors (2) mit der eingegebenen Anweisung vergleicht und den Strom kontinuierlich anpasst, bis eine von dem Antriebsmotor (2) ausgegebene Zugkraft einen Wert in der eingegebenen Anweisung erreicht;
wobei der Antriebsmotor (2) einen Sockel (21), eine Statorbaugruppe (22), die an einer Außenkante des Sockels (21) angeordnet ist, eine Drehwellenbaugruppe (23), die in dem Sockel (21) angeordnet ist, eine Rotorbaugruppe (24), die mit der Drehwellenbaugruppe (23) verbunden ist und die Statorbaugruppe (22) abdeckt, und eine Motorsteuerplatte (25) umfasst, die an dem Sockel (21) angeordnet und mit der Antriebsschaltung (44) verbunden ist;
wobei der Sockel (21) ein internes Ende (211), ein externes Ende (212) und einen Drehmontagehohlraum (213) umfasst, der durch das interne Ende (211) und das externe Ende (212) verläuft, wobei die Drehwellenbaugruppe (23) drehbar in dem Drehmontagehohlraum (213) angebracht ist, ein Montageständer (211a) am internen Ende (211) angeordnet ist, eine interne Nut (212a) in dem externen Ende (212) gebildet ist, ein konvexer Ring an einer Außenkante des Montageständers (211a) angeordnet ist, ein Montageloch in dem konvexen Ring gebildet ist, eine Vielzahl von Spalten (211b) in dem Montageständer (211a) gebildet ist, Durchgangslöcher in dem externen Ende (212) gebildet sind, mit den Spalten (211b) verbunden sind und an einer Seite der internen Nut (212a) liegen;
wobei die Rotorbaugruppe (24) eine äußere Endabdeckung (241), die mit der Drehwellenbaugruppe (23) verbunden ist, einen Verbindungsring (242), der mit der äußeren Endabdeckung (241) verbunden ist und einer Außenkante der Statorbaugruppe (22) entspricht, und ein Rotorelement (243) umfasst, das an dem Verbindungsring (242) angebracht ist und der Statorbaugruppe (22) entspricht, wobei eine innere Endabdeckung (244) mit einer von der äußeren Endabdeckung (241) entfernten Seite des Verbindungsrings (242) verbunden ist und die innere Endabdeckung (244) drehbar mit einer Außenumfangsfläche des externen Endes (212) verbunden ist; wobei die äußere Endabdeckung (241) fest mit einer Zugseilrolle (241b) verbunden ist und ein Fitnesszugseil (3) um die Zugseilrolle (241b) gewunden ist, sich aus dem Gehäuse (1) heraus erstreckt und mit einem Greifring (31) verbunden ist;
wobei die Statorbaugruppe (22) einen Eisenkern (221) und Spulen (222) umfasst, die regelmäßig auf dem Eisenkern (221) angeordnet sind, wobei der Eisenkern (221) eine Vielzahl von Zähnen (223) umfasst, die in seiner Umfangsrichtung angeordnet sind, die Spulen (222) um die Zähne (223) gewickelt sind und eine Außenumfangsfläche des internen Endes (211) mit einer Vielzahl von Befestigungsnuten versehen ist, die einer Innenumfangsfläche des Eisenkerns (221) entsprechen; und wobei die Drehwellenbaugruppe (23) eine Lagerbaugruppe (231), die in dem Drehmontagehohlraum (213) angebracht ist, und eine Drehwelle (232) umfasst, die drehbar in der Lagerbaugruppe (231) angebracht ist, wobei ein Ende der Drehwelle (232) mit der Rotorbaugruppe (24) verbunden ist und ein Fixierungselement (233) an dem anderen Ende der Rotorwelle (232) angebracht ist; und wobei der Drehmontagehohlraum (213) mit einer ersten Begrenzungsnut und einer zweiten Begrenzungsnut versehen ist, die Lagerbaugruppe (231) zwei Lager umfasst, wobei die zwei Lager jeweils in der ersten Begrenzungsnut und der zweiten Begrenzungsnut angebracht sind.

2. - Fitness-Vorrichtung auf Grundlage eines Motors mit Direktantrieb, nach Anspruch 1, **dadurch gekennzeichnet, dass** die äußere Endabdeckung (241) mit einem Verstärkungsständer (241a) versehen ist, der Verstärkungsständer (241a) mit einem Verbindungsloch versehen ist, eine Begrenzungsschulter in dem Verbindungsloch angeordnet ist und die äußere Endabdeckung (241) durch das Verbindungsloch mit der Drehwellenbaugruppe (23) verbunden ist; und die innere Endabdeckung (244) mit einem Verbindungslager verbunden ist, wobei das Verbindungslager um die Außenumfangsfläche des externen Endes (212) herum angeordnet ist.

3. - Fitness-Vorrichtung auf Grundlage eines Motors mit Direktantrieb nach Anspruch 1, **dadurch gekennzeichnet, dass** die Hauptsteuereinrichtung (41) ein MCU-Prozessor ist, das Kommunikationsmodul (43) eine Kommunikationsschnittstelle ist, die mit dem Bedienfeld (11) verbunden ist, und das Abtastmodul (45) ein Stromabtastmodul ist, das zum Abtasten des Stroms der Antriebsmotoren (2) dient.

## Revendications

1. - Un appareil de fitness basé sur un moteur à entraînement direct, comprenant un corps (1), un moteur d'entraînement (2) monté dans le corps (1), une corde de traction de fitness (3) reliée au moteur d'entraînement (2), et un système de commande (4) relié au moteur d'entraînement (2), dans lequel le système de commande (4) comprend un contrôleur principal (41), un module de puissance (42), un module de communication (43), un circuit de commande (44) et un module d'échantillonnage (45), le module de puissance (42) est relié électriquement au contrôleur principal (41) et au module de communication (43), le module de communication (43) est relié électriquement au contrôleur principal (41), le module d'échantillonnage est relié électriquement au moteur d'entraînement et au contrôleur principal, et le circuit de commande (44) est relié électriquement au module de puissance (42), au contrôleur principal (41) et au moteur d'entraînement ; **caractérisé en ce que** : le corps (1) est équipé d'un panneau d'opérations (11) relié électriquement au module de communication (43), le panneau d'opérations (11) est configuré pour envoyer une instruction au module de communication (43) et enregistrer les mouvements à travers celui-ci ;
le module d'échantillonnage (45) compare en continu un courant échantillonné du moteur d'entraînement (2) avec l'instruction envoyée et ajuste le courant en continu jusqu'à ce qu'une force de traction produite par le moteur d'entraînement (2) atteigne la valeur de l'instruction envoyée ;
le moteur d'entraînement (2) comprend une base (21), un ensemble stator (22) disposé sur un bord externe de la base (21), un ensemble arbre rotatif (23) disposé dans la base (21), un ensemble rotor (24) relié à l'arbre rotatif (23) et recouvrant l'ensemble stator (22), et une plaque de contrôle du moteur (25) disposée sur la base (21) et reliée au circuit d'entraînement (44) ;
la base (21) comprend une extrémité interne (211), une extrémité externe (212) et une cavité de montage rotative (213) passant par l'extrémité interne (211) et l'extrémité externe (212), l'ensemble arbre rotatif (23) est monté de façon rotative dans la cavité de montage rotative (213), un support de montage (211a) est disposé à l'extrémité interne (211), une rainure interne (212a) est formée à l'extrémité externe (212), un anneau convexe est disposé sur un bord externe du support de montage (211a), un trou de montage est formé dans l'anneau convexe, une pluralité d'espaces (211b) est formée dans le support de montage (211a), des trous traversants sont formés dans l'extrémité externe (212), reliés aux espaces (211b) et situés sur un côté de la rainure interne (212a) ;
l'ensemble rotor (24) comprend un couvercle d'extrémité externe (241) relié à l'ensemble arbre rotatif (23), une bague de raccordement (242) reliée au couvercle d'extrémité externe (241) et correspondant à un bord externe de l'ensemble stator (22), et un élément rotor (243) monté sur la bague de raccordement (242) et correspondant à l'ensemble stator (22), un couvercle d'extrémité interne (244) est relié à un côté, à l'écart du couvercle d'extrémité externe (241), de la bague de raccordement (242), et le couvercle d'extrémité interne (244) est relié de manière rotative à une surface circonférentielle externe de l'extrémité externe (212) ;
le couvercle d'extrémité externe (241) est fixement relié à un enrouleur de corde de traction (241b), et la corde de traction de fitness (3) est enroulée autour de l'enrouleur de corde de traction (241b), s'étend hors du corps (1) et est reliée à un anneau de préhension (31) ;
l'ensemble stator (22) comprend un noyau en fer (221) et des bobines (222) régulièrement disposées sur le noyau en fer (221), le noyau en fer (221) comprend une pluralité de dents (223) disposées dans une direction circonférentielle de celui-ci, les bobines (222) sont enroulées autour des dents (223), et une surface circonférentielle externe de l'extrémité interne (211) est dotée d'une pluralité de rainures de fixation correspondant à une surface circonférentielle interne du noyau en fer (221) ; et l'ensemble arbre rotatif (23) comprend un ensemble palier (231) montés dans la cavité de montage rotative (213) et un arbre rotatif (232) monté rotativement dans l'ensemble palier (231), une extrémité de l'arbre rotatif (232) est reliée à l'ensemble rotor (24), et un élément de fixation (233) est monté à l'autre extrémité de l'arbre rotatif (232) ; et la cavité de montage rotative (213) est dotée d'une première rainure de limite et d'une deuxième rainure de limite, l'ensemble palier (231) est doté de deux paliers, et les deux paliers sont montés respectivement dans la première rainure de limite et la deuxième rainure de limite.

2. - Appareil de fitness basé sur un moteur à entraînement direct selon la revendication 1, **caractérisé en ce que** le couvercle d'extrémité externe (241) est doté d'un support de renfort (241a), le support de renfort (241a) est doté d'un trou de connexion, un épaulement de limite est disposé dans le trou de connexion, et le couvercle d'extrémité externe (241) est relié à l'ensemble arbre rotatif (23) via le trou de raccordement ; et le couvercle d'extrémité interne (244) est relié à un palier de connexion, et le palier de connexion est disposé autour de la surface circonférentielle externe de l'extrémité externe (212).

3. - Appareil de fitness basé sur un moteur à entraînement direct selon la revendication 1, **caractérisé en ce que** le contrôleur principal (41) est un processeur MCU, le module de communication (43) est une interface de communication reliée au panneau d'opérations (11), et le module d'échantillonnage (45) est un module d'échantillonnage de courant utilisé pour échantillonner un courant du moteur d'entraînement (2).
